# EUROPEAN PATENT APPLICATION

(11) **EP 3 677 854 A1**
(43) Date of publication of application: **08.07.2020**
(21) Application number: 18849526.1
(22) Date of filing: 19.04.2018
(51) Int. Cl.: F24F 11/54, F24F 11/79, F24F 11/80, F24F 120/10

(54) **AIR ENVIRONMENT CONTROL SYSTEM, AIR ENVIRONMENT CONTROL DEVICE, AND AIR ENVIRONMENT CONTROL METHOD**

(30) Priority: 28.08.2017 JP 2017163740
(71) Applicant: Panasonic Intellectual Property Management Co., Ltd., Osaka-shi, Osaka 540-6207 (JP)
(72) Inventor: OOBAYASHI, Fumiaki, Chuo-ku, Osaka-shi Osaka 540-6207 (JP); TANIGUCHI, Kazuhiro, Chuo-ku, Osaka-shi Osaka 540-6207 (JP); SHIMODA, Hiroshi, Chuo-ku, Osaka-shi Osaka 540-6207 (JP); ISHII, Hirotake, Chuo-ku, Osaka-shi Osaka 540-6207 (JP); UEDA, Kimi, Chuo-ku, Osaka-shi Osaka 540-6207 (JP); SUGITA, Kosuke, Chuo-ku, Osaka-shi Osaka 540-6207 (JP); OGATA, Shogo, Chuo-ku, Osaka-shi Osaka 540-6207 (JP); SHIMONAKA, Shota, Chuo-ku, Osaka-shi Osaka 540-6207 (JP)
(74) Representative: Appelt, Christian W.
(86) International application number: PCT/JP2018/016072
(87) International publication number: WO 2019/044027

(57) **Abstract**

An air environment control system (10) includes one or more adjustment devices that adjust an air environment in a space; and a control device (100) that controls the one or more adjustment devices. The air environment control device (100) includes an air environment control unit (110) that controls (i) at least one of the one or more adjustment devices to create a cooler environment in the space, when a person does intellectual work in the space; and (ii) at least one of the one or more adjustment devices to create a warmer environment warmer than the cooler environment in the space, when the person has a break in the space. The control unit (110) further controls at least one of the one or more adjustment devices to apply cool stimulation to the person, when the person starts the intellectual work in the space.

## Description

### TECHNICAL FIELD

The present invention relates to an air environment control system, an air environment control device, and an air environment control method.

### BACKGROUND ART

An air conditioning system for creating a heat environment that reduces cumulative fatigue of a worker doing desk work indoors or allows the worker to recover from the fatigue based on the degree of the fatigue is known (see, e.g., Patent Literature (PTL) 1).

### Citation List

### Patent Literature

PTL 1: Japanese Unexamined Patent Application Publication No. 2001-4189

### SUMMARY OF THE INVENTION

### TECHNICAL PROBLEM

However, the cited art fails to improve the concentration of a worker.

To address the problem, it is an objective of the present invention to provide an air environment control system, an air environment control device, and an air environment control method capable of improving the concentration of a worker.

### SOLUTIONS TO PROBLEM

In order to achieve the objective, an air environment control system according to an aspect of the present invention includes: one or more adjustment devices that adjust an air environment in a space; and a control device that controls the one or more adjustment devices. The control device includes a control unit configured to control (i) at least one of the one or more adjustment devices to create a cooler environment in the space, when a person does intellectual work in the space; and (ii) at least one of the one or more adjustment devices to create a warmer environment warmer than the cooler environment in the space, when the person has a break in the space. The control unit is further configured to control at least one of the one or more adjustment devices to apply cool stimulation to the person, when the person starts the intellectual work in the space.

An air environment control device according to an aspect of the present invention is for controlling an air environment in a space. The air environment control device includes: a control unit configured to create a cooler environment in the space, when a person does intellectual work in the space; and a warmer environment warmer than the cooler environment in the space, when the person has a break in the space. The control unit is configured to apply cool stimulation to the person, when the person starts the intellectual work in the space.

An air environment control method according to an aspect of the present invention is a method of controlling an air environment in a space. The air environment control method includes: creating a cooler environment in the space, when a person does intellectual work in the space; creating a warmer environment warmer than the cooler environment in the space, when the person has a break in the space; and applying cool stimulation to the person, when the person starts the intellectual work in the space.

According to another aspect, the present invention may be implemented by a program that causes a computer to execute the air environment control method. Alternatively, the present invention may be implemented by a computer-readable recording medium storing the program.

### ADVANTAGEOUS EFFECT OF INVENTION

The present invention improves the concentration of a worker.

### BRIEF DESCRIPTION OF DRAWINGS

FIG. 1 is a block diagram illustrating a configuration of an air environment control system according to Embodiment 1.
FIG. 2 illustrates a space controlled by the air environment control system according to Embodiment 1.
FIG. 3 is a flow chart illustrating an operation of the air environment control system according to Embodiment 1.
FIG. 4 illustrates example control of the air environment performed by the air environment control system according to Embodiment 1 in summer.
FIG. 5 illustrates example control of the air environment performed by the air environment control system according to Embodiment 1 in winter.
FIG. 6 is a block diagram illustrating a configuration of an air environment control system according to Embodiment 2.
FIG. 7 illustrates a space controlled by the air environment control system according to Embodiment 2.
FIG. 8 illustrates example control of the air environment performed by the air environment control system according to Embodiment 2.

### DESCRIPTION OF EXEMPLARY EMBODIMENTS

An air environment control system, an air environment control device, and air environment control method according to embodiments of the present invention will be described below in detail with reference to the drawings. Note that the embodiments described below are mere preferred specific examples of the present invention. The numerical values, shapes, materials, constituent elements, the arrangement and connection of the constituent elements, steps, step orders etc. shown in the following embodiments are thus mere examples and are not intended to limit the scope of the present invention. Among the constituent elements in the following embodiments, those not recited in any of the independent claims defining the broadest concept of the present invention are described as optional constituent elements.

Each figure is a schematic view and not necessarily strictly illustrated. The scales are thus not necessarily identical among the figures. In the figures, substantially the same constituent elements are assigned with the same reference marks, and redundant descriptions will be omitted or simplified.

### Embodiment 1

### Outline

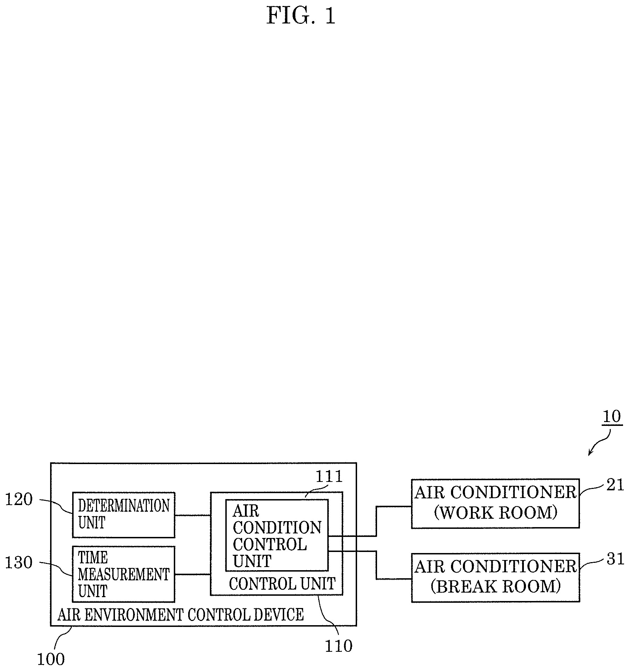

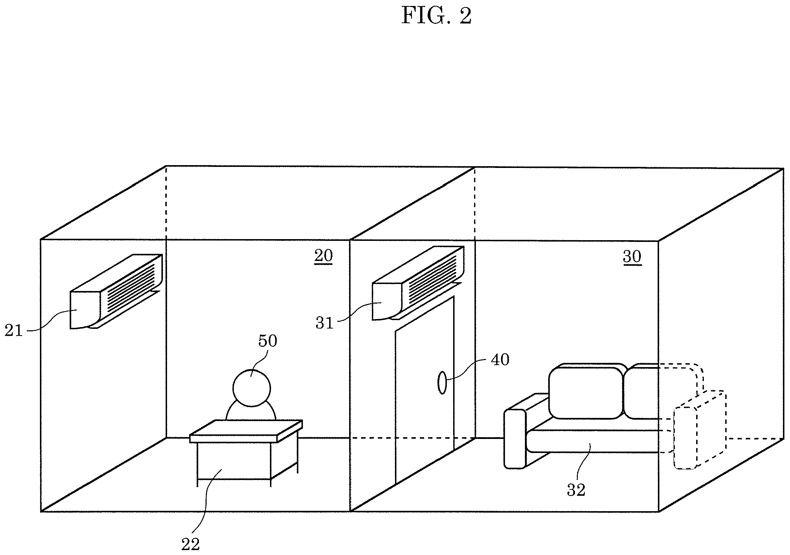

First, the outline of an air environment control system according to Embodiment 1 will be described with reference to FIGS. 1 and 2. FIG. 1 is a block diagram illustrating a configuration of air environment control system 10 according to this embodiment. FIG. 2 illustrates a space controlled by air environment control system 10 according to this embodiment.

Air environment control system 10 controls the air environment in a space. The air environment is the conditions related to the characteristics of the air in the space. Specifically, the air environment includes the heat environment, such as the temperature and humidity, of the space, the conditions of air flow caused in the space, and aroma (smell) caused by aromatic substances, for example.

In this embodiment, as shown in FIG. 2, air environment control system 10 controls the air environments in two spaces including work room 20 and break room 30. Work room 20 and break room 30 intercommunicate through door 40.

Work room 20 is an example of a first space in which person 50 does intellectual work. In work room 20, air conditioner 21 that performs air conditioning in work room 20 is placed. In work room 20, work desk 22 with a work space on which person 50 does the intellectual work is also located. Work room 20 may be a study room, a study, or an office, for example, but not limited thereto.

Air conditioner 21 is an example of a temperature regulator that brings the temperature in work room 20 closer to a set temperature. Specifically, air conditioner 21 may be a heat exchanger, for example. In addition, air conditioner 21 may supply air flow into work room 20. That is, air conditioner 21 may be an example of an air blower that supplies air flow into work room 20. Adjustment of not only the room temperature but also the air flow leads to efficient adjustment of the temperature (i.e., the "feels like" temperature) felt by person 50. The room temperature and the air flow serve to adjust the skin temperature of person 50. That is, the adjustment of the room temperature and the air flow changes the skin temperature of person 50, thereby changing the temperature felt by person 50.

Work desk 22 may be a study desk or an office desk used when person 50 does the intellectual work, but not limited thereto. Work desk 22 may be one, such as a dining table, used for purposess other than the intellectual work. There is no need to locate work desk 22 in work room 20.

The intellectual work may be work, study, or reading, for example, that requires person 50 to use the brain. The more deeply person 50 is concentrated, the more the efficiency in the intellectual work increases. The less deeply person 50 is concentrated, the more the efficiency in the intellectual work decreases. For example, the more deeply person 50 is concentrated, the time required to do certain work decreases and the quality of the work improves.

"Concentration" corresponds to allocation of cognitive resources to a work target. "Cognitive resources" are resources, such as attention or recognition, requiring person 50 to use the brain. The more cognitive resources are allocated, the more deeply the person is concentrated. In this specification, "deeply concentrated" corresponds to "concentrated at a higher degree". The degree of concentration indicates how deeply person 50 is concentrated.

Break room 30 is an example of a second space in which person 50 has a break. In break room 30, air conditioner 31 that performs air conditioning in break room 30 is placed. In break room 30, sofa 32 on which person 50 has a break is also located. Break room 30 may be a living room or a bed room, for example, but not limited thereto.

Air conditioner 31 is an example of a temperature regulator that brings the temperature in break room 30 closer to a set temperature. Specifically, air conditioner 31 may be a heat exchanger, for example. In addition, air conditioner 31 may supply air flow into break room 30. That is, air conditioner 31 may be an example of an air blower that supplies air flow into air conditioner 31.

Sofa 32 may be a chair on which person 50 is seated during a break, but not limited thereto. Depending on the mode of the break of person 50, for example, a bed may be located in break room 30 in place of sofa 32.

As shown in FIG. 1, air environment control system 10 according to this embodiment includes: air environment control device 100 and air conditioners 21 and 31. Air conditioners 21 and 31 are examples of adjustment that adjust the air environment in the associated spaces. Air environment control device 100 is an example of a control device that controls one or more adjustment devices.

Now, a detailed configuration of air environment control device 100 according to this embodiment will be described with reference to FIG. 1.

### Air Environment Control Device

As shown in FIG. 1, air environment control device 100 includes control unit 110, determination unit 120, and time measurement unit 130. Air environment control device 100 may be, for example, a home energy management system (HEMS) controller located at home. Air environment control device 100 may be a non-volatile memory that stores programs, a volatile memory that is a temporary storage area for executing programs, input/output ports, or a processor that executes programs.

When person 50 does the intellectual work in the space, control unit 110 controls at least one of the one or more adjustment devices to create a cooler environment in the space. When person 50 has a break in the space, control unit 110 controls at least one of the one or more adjustment devices to create a warmer environment warmer than the cooler environment in the space. Note that the one or more adjustment devices include one or more air conditioners (specifically, air conditioners 21 and 31).

In this embodiment, the space is divided into work room 20 and break room 30. Control unit 110 controls air conditioner 21 that adjusts the air environment in work room 20, and air conditioner 31 that adjusts the air environment in break room 30. Control unit 110 creates the cooler environment in advance in work room 20, and the warmer environment in advance in break room 30.

For example, control unit 110 may monitor and estimate the action of person 50, and create the cooler environment or the warmer environment based on the estimation result. Specifically, control unit 110 estimates the time when person 50 enters work room 20, creates the cooler environment in work room 20 by the estimated time, and then maintains the cooler environment. Similarly, control unit 110 estimates the time when person 50 enters break room 30, creates the warmer environment in break room 30 by the estimated time, and then maintains the warmer environment. If the creation of the cooler environment or the warmer environment requires a long time, control unit 110 completes the cooler environment or the warmer environment at the same time as the estimated time to achieve lower energy consumption.

Alternatively, control unit 110 may create the cooler environment and the warmer environment based on schedule information indicating the action plan of person 50. The schedule information indicates, for example, the time when person 50 starts the intellectual work and the time required for the work. Alternatively, control unit 110 may create the cooler environment in work room 20 and create the warmer environment in break room 30 regardless of the presence/absence of person 50 in the rooms.

When person 50 starts the intellectual work in the space, control unit 110 further controls at least one of the one or more adjustment devices to apply cool stimulation to person 50. Specifically, the cool stimulation is cold stimulation that lowers the temperature felt by person 50. In this embodiment, control unit 110 determines the detail of the cool stimulation depending on the season to which the date and time measured by time measurement unit 130 belongs, and applies the determined cool stimulation when person 50 starts the intellectual work in the space.

In this embodiment, as shown in FIG. 1, control unit 110 includes air condition control unit 111.

Air condition control unit 111 controls air conditioners 21 and 31. Specifically, air condition control unit 111 controls air conditioner 21 to create the cooler environment in work room 20. Air condition control unit 111 controls air conditioner 31 to create the warmer environment in break room 30.

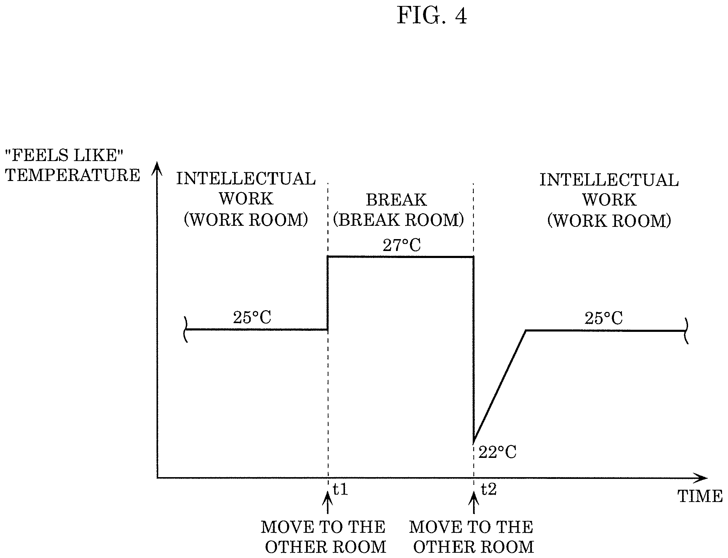

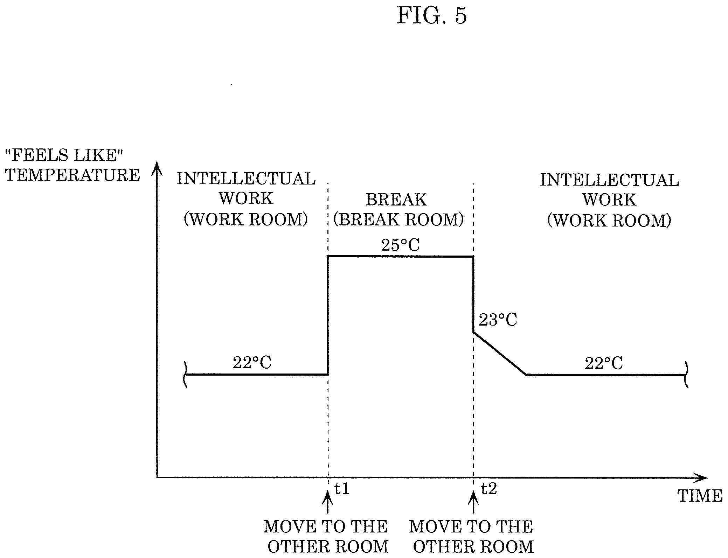

For example, air condition control unit 111 has a temperature control function to change the set temperatures of air conditioners 21 and 31. Air condition control unit 111 sets the set temperature of air conditioner 21 to be lower than the set temperature of air conditioner 31 to create the cooler environment in work room 20 and create the warmer environment in break room 30. The detail will be described later with reference to FIGS. 4 and 5.

When person 50 starts the intellectual work in the space, air condition control unit 111 controls at least one of the one or more air conditioners to apply, as the cool stimulation, the cold stimulation that lowers the temperature felt by person 50. When person 50 starts a break in the space, air condition control unit 111 further controls at least one of the one or more air conditioners to apply warm stimulation that raises the temperature felt by person 50. In this embodiment, air condition control unit 111 adjusts the set temperatures of air conditioners 21 and 31 to apply the cold stimulation or the warm stimulation to person 50.

Determination unit 120 determines whether the action of person 50 is the intellectual work or a break. In this embodiment, determination unit 120 determines whether the action is intellectual work or a break based on the presence/absence of person 50 in the rooms. Specifically, when person 50 is in work room 20, determination unit 120 determines that the action of person 50 is the intellectual work. When person 50 is in break room 30, determination unit 120 determines that the action of person 50 is a break.

Determination unit 120 determines the presence/absence of person 50 in work room 20 and break room 30, for example, based on a result of detection by an indoor camera or a human sensor (both not shown) located in each room. Alternatively, determination unit 120 may determine the presence/absence of person 50 in the rooms based on a result of detection by an opening/closing sensor located at door 40.

Time measurement unit 130 is a timer that measures a date and a time. Specifically, time measurement unit 130 measures the current date in a year/month/day format and the current time in an hour/minute/second format. The measurement is however not limited thereto. Time measurement unit 130 may measure only the current date.

### Operation

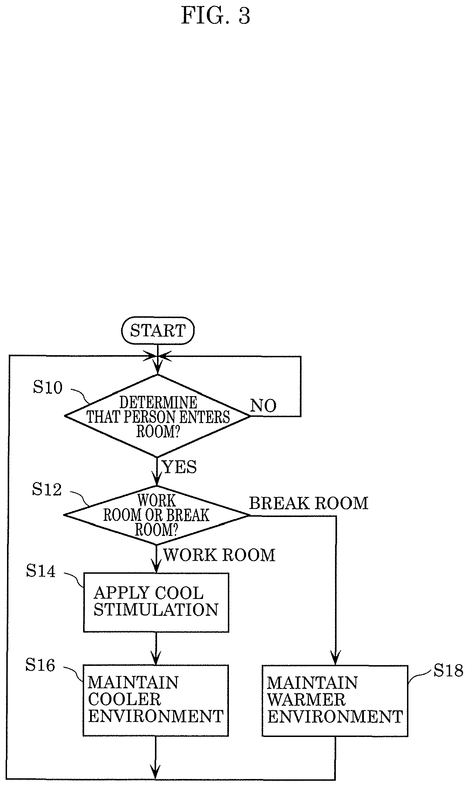

Now, an operation of air environment control system 10 according to this embodiment will be described with reference to FIG. 3. FIG. 3 is a flow chart illustrating the operation of air environment control system 10 according to this embodiment.

Note that how air environment control system 10 creates the cooler environment in advance in work room 20 and the warmer environment in advance in break room 30 will be described.

As shown in FIG. 3, first, determination unit 120 determines that person 50 has entered a room (S10). For example, based on the result of sensing by the human sensor located in work room 20 or break room 30, determination unit 120 determines whether person 50 has entered work room 20 or break room 30.

If the unit determines that person 50 has entered work room 20 (Yes in S10 and "work room" in S12), air condition control unit 111 controls air conditioner 21 to apply the cold stimulation to person 50 (S14). After that, air condition control unit 111 maintains the cooler environment in work room 20 (S16).

If the unit determines that person 50 has entered break room 30 (No in S10 and "break room" in S12), air condition control unit 111 controls air conditioner 31 to maintain the warmer environment in break room 30 (S18). The warmer environment is warmer than the cooler environment. Specifically, the temperature felt by person 50 is higher in the warmer environment than in the cooler environment.

Now, specific examples of the warmer environment, the cooler environment, and the cool stimulation will be described.

### Control of Air Environment

Next, example control of the air environment by air environment control system 10 according to this embodiment will be described. As described above, air environment control system 10 performs control depending on the season. Control in summer and control in winter will be described below in detail.

Whether it is summer or winter is determined, for example, based on the date. Specifically, summer is from the vernal equinox day to the autumnal equinox day, whereas winder is from the autumnal equinox day to the vernal equinox day. How to determine summer and winter is however not limited thereto and may be determined based on prediction of annual temperature change. Control unit 110 determines whether the date measured by time measurement unit 130 belongs to summer or winter, and determines the control detail based on the determination result.

### Control in Summer

First, example control of the air environment in summer will be described with reference to FIG. 4. FIG. 4 illustrates example control of the air environment performed by air environment control system 10 according to this embodiment in summer. In FIG. 4, the horizontal axis represents the time, whereas the vertical axis represents the temperature (i.e., the "feels like" temperature) felt by person 50.

The action of person 50 shown in FIG. 4 is as follows. At first, person 50 is in work room 20 and does the intellectual work. At time t1, person 50 stops the intellectual work and enters break room 30 to have a break. At time t2, after having the break for a while in break room 30, person 50 goes back to work room 20 and starts the intellectual work. After that, person 50 continues the intellectual work in work room 20.

Air condition control unit 111 controls air conditioners 21 and 31 so that the temperature felt by person 50 changes along the graph shown in FIG. 4. The temperature felt by person 50 changes depending on the temperature (i.e., the room temperature), humidity, and the strength of air flow in the space, as well as the amount of clothes, for example. The temperature felt by person 50 is determined based on the predicted mean vote (PMV), for example. The case where the room temperature is substantially equal to the temperature felt by person 50 will be described below.

In this case, if air condition control unit 111 changes the set temperatures of air conditioners 21 and 31, the temperature in the space is closer to the changed set temperatures. The temperature felt by person 50 is thus closer to the changed set temperatures. In this manner, air condition control unit 111 adjusts the set temperatures of air conditioners 21 and 31 to adjust the temperature felt by person 50. Note that the set temperatures may be lowered, if person 50 wears a large amount of clothes, for example.

As shown in FIG. 4, when person 50 does the intellectual work, specifically the period until time t1 and the period after time t2, air condition control unit 111 creates the cooler environment in the space. In this embodiment, since the space is divided into work room 20 and break room 30, air condition control unit 111 may always create the cooler environment in work room 20.

Specifically, air condition control unit 111 sets the set temperature of air conditioner 21 to be lower than the temperature set in the warmer environment to create the cooler environment in work room 20. For example, air condition control unit 111 sets the set temperature of air conditioner 21 to be 25°C. Air condition control unit 111 maintains the set temperature of air conditioner 21 at 25°C to maintain the temperature (i.e., the room temperature) in work room 20 at 25°C. The maintenance of the cooler environment during the intellectual work improves the concentration of the person on the intellectual work.

On the other hand, when person 50 has a break, specifically, from time t1 to time t2, air condition control unit 111 creates the warmer environment in the space. In this embodiment, since the space is divided into work room 20 and break room 30, air condition control unit 111 may always create the warmer environment in break room 30.

Specifically, air condition control unit 111 sets the set temperature of air conditioner 21 to be higher than the temperature set in the cooler environment to create the warmer environment in break room 30. For example, air condition control unit 111 sets the set temperature of air conditioner 31 to be 27°C. Air condition control unit 111 maintains the set temperature of air conditioner 31 at 27°C to maintain the temperature (i.e., the room temperature) in break room 30 at 27°C.

As shown in FIG. 4, there is a difference of 2°C in the set temperature between the cooler environment and the warmer environment. Thus, when person 50 moves from work room 20 to break room 30, the difference of 2°C in the "feels like" temperature is applied as the warm stimulation to person 50. This relieves the tension of person 50 and promotes relaxation to improve the effect of recovering from fatigue. The maintenance of the warmer environment when person 50 has a break maintains the relaxation to improve the effect of recovering from fatigue. This improves the concentration when the person does the intellectual work again.

At time t2 when the intellectual work starts, air condition control unit 111 applies the cold stimulation to person 50. The cold stimulation shown in FIG. 4 is cooler than the cooler environment. Specifically, air condition control unit 111 changes the set temperature of air conditioner 21 to be a second temperature (e.g., 22°C) lower than a first temperature (25°C here) that is the temperature set in the cooler environment. If actual decrease in the room temperature in work room 20 requires a long time after the change in the set temperature, air condition control unit 111 sets the set temperature of air conditioner 21 in advance to 22°C. For example, if determination unit 120 determines that person 50 has left work room 20 or entered break room 30, air condition control unit 111 changes the set temperature of air conditioner 21 to 22°C. Accordingly, at time t2 when person 50 enters work room 20 again, the room temperature in work room 20 can be set to 22°C.

Over a predetermined period from the time when person 50 starts the intellectual work in work room 20, air condition control unit 111 raises the set temperature of air conditioner 21 from the second temperature (e.g., 22°C) to the first temperature (e.g., 25°C). Specifically, upon detection that person 50 has entered work room 20, air condition control unit 111 gradually raises the set temperature. The time period for raising the set temperature extends, for example, several minutes, but not limited thereto.

In this manner, in this embodiment, the cold stimulation cooler than the cooler environment is applied to person 50 at the start of the intellectual work. This allows the brain relaxing after the break to smoothly shift to a state concentrated on the intellectual work, thereby improving the concentration of person 50.

In particular, in the relationship between the coolness/warmth felt by a human and the temperature range comfortable for the human, the comfortable temperature range shifts from the neutral position between the coolness and warmth to the coolness in summer. The cold stimulation applied to the person in summer causes thus a larger amount of change in the "feels like" temperature than the warm stimulation. Accordingly, the application of strong cold stimulation that is comfortable for person 50 to the person in summer improves the concentration of the person within the range in which person 50 feels comfortable.

### Control in Winter

Next, example control of the air environment in winter will be described with reference to FIG. 5. FIG. 5 illustrates example control of the air environment performed by air environment control system 10 according to this embodiment in winter. In FIG. 5, the horizontal axis represents the time, whereas the vertical axis represents the temperature (i.e., the "feels like" temperature) felt by person 50.

The action of person 50 shown in FIG. 5 is the same as in FIG. 4. Differences between summer and winter will be described mainly.

In control of the air environment in winter, air condition control unit 111 sets the set temperatures of air conditioners 21 and 31 to be lower than the set temperature in the control of the air environment in summer in each of the cooler environment and the warmer environment. Specifically, air condition control unit 111 sets the set temperature of air conditioner 21 for creating the cooler environment to 22°C, and the set temperature of air conditioner 31 for creating the warmer environment to 25°C.

In the control of the air environment in winter, the set temperatures of air conditioners 21 and 31 differ between morning and afternoon. Specifically, since the human body temperature is higher in the afternoon than in the morning by 1°C due to the circadian rhythm, the set temperatures are lowered by 1°C. For example, air condition control unit 111 sets the set temperature in work room 20 in the afternoon to 21°C and the set temperature in break room 30 in the afternoon to 24°C.

As shown in FIG. 5, there is a difference of 3°C in the set temperature between the cooler environment and the warmer environment. Thus, when person 50 moves from work room 20 to break room 30, the difference of 3°C in the "feels like" temperature is applied as the warm stimulation to person 50. This relieves the tension of person 50 and promotes relaxation to improve the effect of recovering from fatigue. The maintenance of the warmer environment when person 50 has a break maintains the relaxation to improve the effect of recovering from fatigue. This improves the concentration when the person does the intellectual work again.

At time t2 when the intellectual work starts, air condition control unit 111 applies the cold stimulation to person 50. The cold stimulation shown in FIG. 5 is warmer than the cooler environment. Specifically, air condition control unit 111 changes the set temperature of air conditioner 21 to be a second temperature (e.g., 23°C) higher than a first temperature (22°C here) that is the temperature set in the cooler environment and lower than a temperature (25°C here) set in the warmer environment.

Like in summer, air condition control unit 111 sets the set temperature of air conditioner 21 in advance to 23°C. For example, if determination unit 120 determines that person 50 has left work room 20 or entered break room 30, air condition control unit 111 changes the set temperature of air conditioner 21 to 23°C.

Over a predetermined period from the time when person 50 starts the intellectual work in work room 20, air condition control unit 111 lowers the set temperature of air conditioner 21 from the second temperature (e.g., 23°C) to the first temperature (e.g., 22°C). Specifically, upon detection that person 50 has entered work room 20, air condition control unit 111 gradually lowers the set temperature. The time period for lowering the set temperature extends, for example, several minutes, but not limited thereto.

In this manner, in this embodiment, the cold stimulation is applied to person 50 at the start of the intellectual work. This allows the brain relaxing after the break to smoothly shift to a state concentrated on the intellectual work, thereby improving the concentration of person 50.

In particular, in the relationship between the coolness/warmth felt by a human and the temperature range comfortable for the human, the comfortable temperature range shifts from the neutral position between the coolness and warmth to the warmth in winter. The warm stimulation applied to the person in winter causes thus a larger amount of change in the "feels like" temperature than the cold stimulation. This reduces application of strong cold stimulation and applies comfortable warm stimulation in winter. The application of the cold stimulation with a smaller difference in the "feels like" temperature to person 50 improves the concentration of the person within the range in which person 50 feels comfortable.

In the control in each of summer and winter, air condition control unit 111 may control air conditioner 31 to supply fluctuating air flow in creating the warmer environment. The fluctuating air flow has a flow rate that changes over time. For example, the flow rate changes with fluctuation of 1/f. This improves the relaxation of person 50 having a break and the concentration when the person does the intellectual work again.

### Advantages etc.

As described above, air environment control system 10 according to this embodiment includes one or more adjustment devices and air environment control device 100. The one or more adjustment devices adjust the air environment in a space. Air environment control device 100 is that controls the one or more adjustment devices. Air environment control device 100 includes control unit 110. Control unit 110 is that controls (i) air conditioner 21 to create a cooler environment in work room 20, when person 50 does intellectual work in work room 20. Control unit 110 is that controls (ii) air conditioner 31 to create a warmer environment warmer than the cooler environment in break room 30, when person 50 has a break in break room 30. Control unit 110 further controls air conditioner 21 to apply cool stimulation to person 50, when person 50 starts the intellectual work in work room 20.

This configuration creates the cooler environment to improve the concentration on the intellectual work, when person 50 does the intellectual work. This configuration also creates the warmer environment to release the tension of the person and improve relaxation, when person 50 has a break. The improvement in the relaxation causes the brain to recover from fatigue and improves the concentration when the person does the intellectual work again. The configuration applies the cool stimulation to cause person 50 to make psychological distinction from the break when person 50 starts the intellectual work. This allows the person to smoothly shift from the break to the intellectual work, thereby improving the concentration of person 50.

The present inventors have actually performed evaluation tests on the concentration of 38 male university students in summer. For the evaluation of concentration, an evaluation index called "concentration time ratio (CTR)" was used. CTR is an index indicating the ratio of the total time of concentration to the time of intellectual work. The greater the value is, the more the subjects are concentrated.

In the evaluation tests on the concentration, the subjects did the intellectual work for 45 minutes, had a break for 30 minutes, and then did the intellectual work again for 45 minutes. The subjects answered comparison questions as the intellectual work. The comparison questions are at the same difficulty level and not affected by the skills. For example, the comparison questions are to be answered whether the meaning categories of two terms are the same or different and whether the combination between two numbers and the magnitude relation is correct or incorrect.

As a result of the evaluation tests on the concentration, it was found that the maintenance of the cooler environment during the intellectual work and the warmer environment during the break improved the concentration. In particular, application of the cool stimulation at the start of the intellectual work increases the value of CTR by 2.3% and thus improves the concentration, as compared to the case without applying any cool stimulation. Note that the value of CTR at this time is the mean value of 28 subjects who were under the uniform conditions, out of 38 subjects.

In this manner, air environment control system 10 according to this embodiment improves the concentration of person 50.

For example, the one or more adjustment devices include one or more air conditioners 21 and 31 that perform air conditioning in the space. Control unit 110 includes air condition control unit 111 that controls air conditioner 21 to apply, as the cool stimulation, the cold stimulation that lowers the temperature felt by person 50, when person 50 starts the intellectual work in work room 20.

With this configuration, the application of the cold stimulation when person 50 starts the intellectual work directly lowers the temperature felt by person 50 and causes the person to smoothly shift from the break to the intellectual work, thereby improving the concentration of person 50.

For example, air condition control unit 111 further controls air conditioner 31 to apply the warm stimulation that raises the temperature felt by person 50, when person 50 starts a break in break room 30.

With this configuration, the application of the warm stimulation when person 50 starts the break directly raises the temperature felt by person 50 and causes the person to smoothly shift from the intellectual work to the break. Accordingly, since the person effectively recovers from fatigue during the break, the concentration of person 50 improves when the person does the intellectual work again.

For example, air conditioners 21 and 31 bring the temperature in the space to a set temperature. Air condition control unit 111 includes a temperature control unit that changes the set temperatures of air conditioners 21 and 31. Over a predetermined period from the time when person 50 starts intellectual work in work room 20, air condition control unit 111 raises the set temperature of air conditioner 21 to a first temperature that is the temperature set in the cooler environment from a second temperature lower than the first temperature.

With this configuration, when person 50 starts the intellectual work, the stimulation is applied to set the "feels like" temperature to be lower than the "feels like" temperature in the cooler environment. This causes the person to more smoothly shift from the break to the intellectual work, thereby improving the concentration of person 50. In particular, in the relationship between the coolness/warmth felt by a human and the temperature range comfortable for the human, the comfortable temperature range shifts from the neutral position between the coolness and warmth to the coolness in summer. Accordingly, the application of strong cold stimulation that is comfortable for person 50 to the person in summer improves the concentration of the person within the range in which person 50 feels comfortable.

For example, over a predetermined period from the time when person 50 starts the intellectual work in work room 20, air condition control unit 111 lowers the set temperature of air conditioner 21 to be a first temperature that is the temperature set in the cooler environment from a second temperature higher than the first temperature and lower than the temperature set in the warmer environment.

This reduces application of cold stimulation that is too strong for person 50. In particular, the comfortable temperature range shifts from the neutral position between the coolness and warmth to the warmth in winter. Accordingly, the application of the cold stimulation with a smaller difference in the "feels like" temperature to person 50 improves the concentration of the person within the range in which person 50 feels comfortable.

For example, the space includes work room 20 in which person 50 does the intellectual work, and break room 30 in which person 50 has a break. Control unit 110 creates the cooler environment in advance in work room 20, and the warmer environment in advance in break room 30.

With this configuration, different air environments are created in work room 20 and break room 30. This easily maintains the respective air environments.

For example, air environment control device 100 further includes time measurement unit 130 that measures a date and a time. Control unit 110 determines the detail of the cool stimulation depending on the season to which the date and the time measured by time measurement unit 130 belongs, and applies the determined cool stimulation when person 50 starts the intellectual work in work room 20.

With this configuration, suitable cool stimulation can be applied based on a change in the body temperature depending on the season. This effectively improves the concentration, while maintaining the comfort of person 50.

For example, air environment control device 100 according to this embodiment controls the air environment in a space. The air environment control device includes control unit 110 that creates a cooler environment in the space, when person 50 does intellectual work in the space, and create warmer environment warmer than the cooler environment in the space, when person 50 has a break in the space. In addition, control unit 110 applies cool stimulation to person 50, when person 50 starts the intellectual work in the space.

Like air environment control system 10 described above, this configuration improves the concentration of person 50.

For example, an air environment control method according to this embodiment controls the air environment in a space. The air environment control method includes creating a cooler environment in the space, when person 50 does intellectual work in the space; creating a warmer environment warmer than the cooler environment in the space, when person 50 has a break in the space; and applying cool stimulation to person 50, when person 50 starts the intellectual work in the space, For example, a program according to this embodiment causes a computer to execute the air environment control method.

Like air environment control system 10 described above, this method improves the concentration of person 50.

### Embodiment 2

Now, Embodiment 2 will be described.

While the space is divided into work room 20 and break room 30 in Embodiment 1, example control of the air environment in a single undivided space will be described in Embodiment 2.

### Configuration

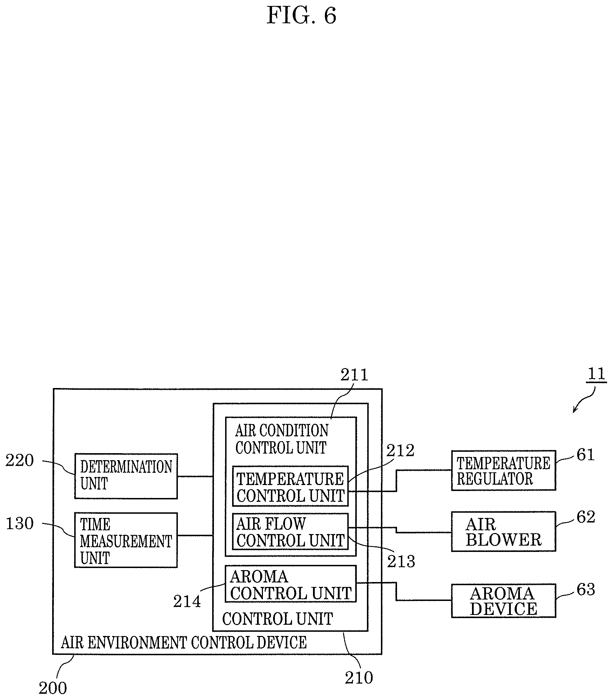

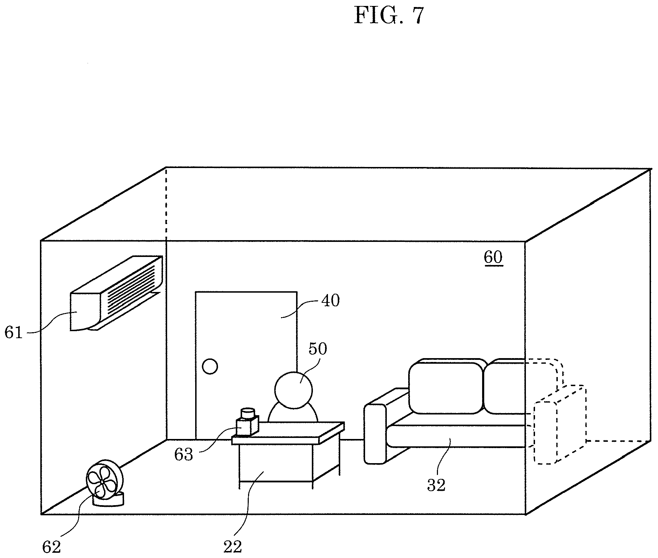

First, the outline of an air environment control system according to Embodiment 2 will be described with reference to FIGS. 6 and 7. FIG. 6 is a block diagram illustrating a configuration of air environment control system 11 according to this embodiment. FIG. 7 illustrates a space controlled by air environment control system 11 according to this embodiment.

As shown in FIG. 6, air environment control system 11 includes air environment control device 200, temperature regulator 61, air blower 62, and aroma device 63. Note that air environment control system 11 may include an air conditioner with a temperature regulation function and a blowing function in place of temperature regulator 61 and air blower 62.

Air environment control system 11 according to this embodiment controls the air environment in one room 60 as shown in FIG. 7. Room 60 is a space in which person 50 does intellectual work as well as a space in which person 50 has a break. Room 60 is, for example, a study room for a child.

Person 50 in room 60 alternates the intellectual work and breaks at his/her preferred timing, for example. Alternatively, person 50 alternates the intellectual work and breaks as promoted by a change in the air environment controlled by air environment control system 11.

In this embodiment, work desk 22 and sofa 32 are located in room 60. In addition, temperature regulator 61, air blower 62, and aroma device 63 are placed in room 60.

Temperature regulator 61 is an example of an air conditioner that brings the temperature in room 60 to a set temperature. Specifically, temperature regulator 61 is an air conditioner or a heat exchanger.

Air blower 62 is an example of an air conditioner that supplies air flow into room 60. Specifically, air blower 62 is a fan or a circulator.

Aroma device 63 supplies aromatic substances into room 60. Specifically, aroma device 63 releases refreshing aroma into room 60. The refreshing aroma is smell of mint, for example. Aroma device 63 may also release aroma that improves the relaxation of person 50.

As shown in FIG. 6, air environment control device 200 includes control unit 210, determination unit 220, and time measurement unit 130. Time measurement unit 130 is operated in the same manner as in Embodiment 1.

Control unit 210 creates a cooler environment in room 60, when determination unit 220 determines that the action of person 50 is the intellectual work, and creates a warmer environment in room 60, when determination unit 220 determines that the action of person 50 is a break. In addition, control unit 210 applies cool stimulation to person 50, when determination unit 220 determines that person 50 starts the intellectual work.

Control unit 210 includes air condition control unit 211 and aroma control unit 214. Air condition control unit 211 includes temperature control unit 212 and air flow control unit 213.

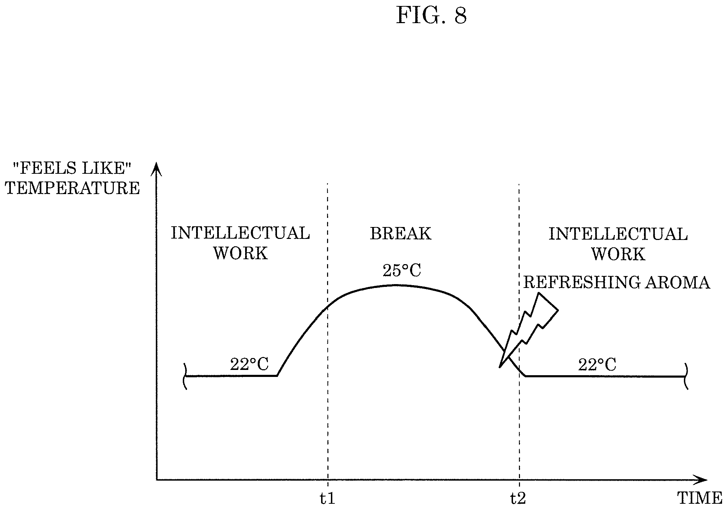

Temperature control unit 212 controls temperature regulator 61. Specifically, temperature control unit 212 raises the set temperature of temperature regulator 61, when person 50 does the intellectual work; and lowers the set temperature of temperature regulator 61, when person 50 has a break; based on the result of determination by determination unit 220. A specific control example will be described later with reference to FIG. 8.

Air flow control unit 213 controls air blower 62. For example, when person 50 starts the intellectual work in room 60, air flow control unit 213 controls air blower 62 to blow air to person 50.

When person 50 starts the intellectual work in room 60, aroma control unit 214 controls aroma device 63 to apply refreshing aroma as the cool stimulation. Specifically, aroma control unit 214 controls aroma device 63 to release the refreshing aroma into room 60, when determination unit 220 determines that person 50 starts the intellectual work.

Determination unit 220 determines whether the action of person 50 is the intellectual work or a break. In this embodiment, determination unit 220 determines the action of person 50 based on schedule information determined in advance. Determination unit 220 cases person 50 or a manager (e.g., a guardian) of person 50 to register a time to start intellectual work and a time to start a break, for example, to prepare schedule information. The start time is registered through a mobile terminal, such as a smartphone, owned by person 50 or the manager, or an exclusive terminal for air environment control system 11, for example. The means are however not limited thereto.

Alternatively, determination unit 220 may detect the action of person 50 utilizing an indoor camera or a human sensor (both not shown) and determine the action based on the detection result. Specifically, determination unit 220 determines that person 50 does the intellectual work, when the person is near work desk 22. Determination unit 220 determines that person 50 has a break, when the person is seated on sofa 32. In addition, determination unit 220 determines that the person starts the intellectual work, when the person is back to work desk 22 from a place, such as sofa 32, other than work desk 22. Determination unit 220 determines that the person starts a break, when the person moves to sofa 32 from a place, such as work desk 22, other than sofa 32.

Alternatively, determination unit 220 may determine the action of person 50 based on instructions from person 50 or the manager of person 50. For example, determination unit 220 may cause person 50 or the manager to input instructions on the start and end of the intellectual work as well as the start and end of a break through the mobile terminal, such as the smartphone, owned by the person or the manager or the exclusive terminal, and determine the action of person 50 based on the input instructions.

Alternatively, determination unit 220 may obtain operation information through a home appliance, such as a TV or a radio, utilized for entertainment or an operation terminal, such as a remote controller, operating the home appliance. The unit may determine the action of person 50 based on the obtained operation information. For example, determination unit 220 may determine that person 50 has started a break, when the TV or the radio is turned on; and determine that person 50 has started the intellectual work, when the TV or the radio is turned off.

### Control of Air Environment

Next, example control of the air environment performed by air environment control system 11 according to this embodiment will be described with reference to FIG. 8. FIG. 8 illustrates example control of the air environment performed by air environment control system 11 according to this embodiment. In FIG. 8, the horizontal axis represents the time, whereas the vertical axis represents the "feels like" temperature.

The action of person 50 shown in FIG. 8 is as follows. At first, person 50 does the intellectual work at work desk 22 in room 60. At time t1, person 50 stops the intellectual work and has a break. For example, person 50 moves to sofa 32 to have a break. At time t2 after having the break for a while, person 50 goes back to work desk 22 and starts the intellectual work. After that, person 50 continues the intellectual work at work desk 22.

In this embodiment, control where time t1 when person 50 stops the intellectual work and starts the break and time t2 when person 50 stops the break and starts the intellectual work are determined in advance will be described. For example, a parent(s) determine(s) a study plan of a child (i.e., person 50) in advance, and control unit 210 controls the air environment in room 60 based on the plan.

In this embodiment, control unit 210 controls temperature regulator 61, air blower 62, and aroma device 63 so that the temperature felt by person 50 changes along the graph shown in FIG. 8. As in Embodiment 1, control unit 210 creates the cooler environment in room 60, when person 50 does the intellectual work; and the warmer environment in room 60, when person 50 has a break.

Specifically, as shown in FIG. 8, temperature control unit 212 sets the set temperature of temperature regulator 61 to 22°C, when person 50 does intellectual work; and the set temperature of temperature regulator 61 to 25°C, when person 50 has a break. In addition, air flow control unit 213 applies weak air flow to person 50, when person 50 does the intellectual work.

In this embodiment, since time t1 when person 50 stops the intellectual work and starts the break is determined in advance, temperature control unit 212 raises the set temperature of temperature regulator 61 before time t1. This allows setting of the room temperature in room 60 to a temperature (e.g., 25°C) in the warmer environment at time t1 when the person starts the break.

In this case, in a period from the increase in the set temperature to the start of the break, that is, while person 50 still does the intellectual work, air blower 62 applies the air flow to person 50 based on the control by air flow control unit 213. This allows maintenance of the cooler environment during the intellectual work.

Similarly, if time t2 when person 50 stops the break and starts the intellectual work is determined in advance, temperature control unit 212 lowers the set temperature of temperature regulator 61 before time t2. This allows setting of the room temperature in room 60 to a temperature (e.g., 22°C) in the cooler environment at time t2 when the person starts the intellectual work.

In this case, in a period from the decrease in the set temperature to the start of the intellectual work, that is, while person 50 still has the break, air blower 62 applies weak warm air flow to person 50 based on the control by air flow control unit 213. This allows maintenance of the warmer environment during the break.

In addition, in this embodiment, aroma control unit 214 controls aroma device 63 to release refreshing aroma at time t2 when person 50 starts the intellectual work. Even a change in the set temperature of one room 60 causes only a slow change in the room temperature and the "feels like" temperature. Accordingly, the release of the refreshing aroma applies cool stimulation to person 50 and improves the concentration of person 50.

In this embodiment, air flow control unit 213 controls air blower 62 to supply fluctuating air flow, when person 50 has a break. In addition to or in place of the supply of the fluctuating air flow, aroma control unit 214 may control aroma device 63 to supply aroma with a relaxation effect, when person 50 has a break. For example, aroma device 63 may intermittently supply aroma of "hinoki", Japanese cypress, to the periphery of person 50 based on the control by aroma control unit 214. This improves the relaxation of person 50 during the break and the concentration when the person does the intellectual work again.

### Advantageous Effects etc.

As described above, in air environment control system 11 according to this embodiment, the one or more adjustment devices include aroma device 63 that supplies aromatic substances into room 60. Control unit 210 includes aroma control unit 214 that controls aroma device 63 to apply refreshing aroma as the cool stimulation, when person 50 starts the intellectual work in room 60.

With this configuration, the refreshing aroma gives cool feeling to person 50. In particular, in winter, for example, cold stimulation lowering the "feels like" temperature may be uncomfortable for person 50. Air environment control system 11 according to this embodiment applies the cool stimulation for person 50, thereby improving the concentration of person 50 while maintaining the comfort of the person.

For example, air environment control device 200 further includes determination unit 220 that determines whether the action of person 50 is the intellectual work or a break. Control unit 210 creates the cooler environment in room 60, when determination unit 220 determines that the action is the intellectual work, and creates the warmer environment in room 60, when determination unit 220 determines that the action is a break.

This configuration controls the air environment in accordance with the action of person 50 and thus provides an unchanged, steady environment to improve the concentration, when person 50 does intellectual work.

In the case where the temperature felt by person 50 is adjusted in one room 60 as in this embodiment, it is difficult to rapidly change the room temperature in room 60. It is thus difficult to rapidly change the temperature felt by person 50 simply by changing the set temperature of the air conditioner.

By contrast, in this embodiment, for example, the one or more air conditioners include air blower 62 that supplies air flow into room 60. Air condition control unit 211 includes air flow control unit 213 that controls air blower 62. When person 50 starts the intellectual work in room 60, air flow control unit 213 controls air blower 62 to send air flow toward person 50.

With this configuration, not only the room temperature but also the air flow is adjusted to efficiently adjust the temperature felt by person 50. Air environment control system 11 applies, for example, cool air flow as the cold stimulation to person 50. On the other hand, air environment control system 11 applies, for example, warm air flow as warm stimulation to person 50. Alternatively, air environment control system 11 stops the air flow to person 50 to apply the warm stimulation to person 50.

### Others

As described above, the air environment control system, the air environment control device, and the air environment control method according to the present invention have been described based on the embodiments and variations. The present invention is however not limited to the embodiments.

For example, while an example has been described above in Embodiment 1 where control unit 110 performs control depending on the season, the control unit may perform the same control regardless of the season. For example, control unit 110 may perform the heat control shown in FIG. 3 throughout the year. Alternatively, control unit 110 may perform the heat control shown in FIG. 4 throughout the year.

For example, while an example has been described above in Embodiment 1 where control unit 110 determines the season based on the date, the control unit may determine the season based on the outside temperature. Specifically, air environment control system 10 may include a temperature sensor that measures the outside temperature. Control unit 110 may determine that the current season is the summer, if the outside temperature measured by the temperature sensor is higher than a predetermined threshold. The control unit may determine that the current season is the winter, if the outside temperature is lower than or equal to the threshold.

For example, air environment control system 10 or 11 and air environment control device 100 or 200 may control not only the air environment but also the lighting environment. For example, one or more lighting devices are placed in each of work room 20, break room 30, and room 60.

The lighting devices placed in work room 20 and room 60 function to emit illumination light with a color temperature higher than about 5000 K that is generally called "neutral white". For example, the lighting devices placed in work room 20 and room 60 emit light with a color temperature of about 6200 K, what is called "lighting for study", when person 50 does intellectual work.

The lighting devices placed in break room 30 and room 60 function to emit illumination light with a color temperature lower than about 4200 K that is generally called "white". For example, the lighting devices placed in break room 30 and room 60 emit light with a color temperature of about 2000 K, what is called "relaxing lighting", when person 50 has a break.

A single lighting device placed in room 60 may adjust the color temperature within a range from 2000 K to 6200 K. Alternatively, a first lighting device that emits light with a color temperature of 2000 K and a second lighting device that emits light with a color temperature of 6200 K may be placed in room 60.

For example, air environment control device 100 or 200 emits light with a color temperature of about 2000 K to create the warmer environment in break room 30 or room 60. Accordingly, not only the air environment but also the lighting environment further improves the relaxation of person 50. This promotes recovery of the brain from fatigue and improves the concentration when the person starts the intellectual work again.

On the other hand, air environment control device 100 or 200 emits light with a color temperature of about 6200 K to create the cooler environment in work room 20 or room 60. Accordingly, not only the air environment but also the lighting environment further improves the concentration of person 50 on the intellectual work.

The method of communications between the devices described above in the embodiments are not particularly limited. Wireless communications may be established between devices by a method (or standard) of near-field communications such as ZigBee (registered trademark), Bluetooth (registered trademark), or a wireless local area network (LAN). Alternatively, the wireless communications may be established by a method (or standard) via a far-field communication network such as internet. Between the devices, the wireless communications may be replaced with wired communications. The wired communications may be, specifically, established by power line communications (PLC) or a wired LAN.

In the embodiments described above, the processing executed by a certain processing unit may be executed by another processing unit. The order of the plurality of processing may be changed. Alternatively, the plurality of processing may be executed in parallel. How to distribute the constituent elements of the air environment control system to the plurality of devices has been described as an example. Instead, for example, one or more constituent elements of a certain device may be included in another device. The air environment control system may be composed of a single device.

For example, the processing described above in the embodiments may be implemented by centralized processing using a single device (or system) or decentralized processing using a plurality of devices. The program may be executed by a single processor or a plurality of processors, that is, centralized processing or decentralized processing.

In the embodiments described above, some or all of the constituent elements of the control unit, for example, may be exclusive hardware or achieved by executing software programs suitable for the constituent elements. The constituent elements may be configured as a program execution unit, such as a central processing unit (CPU) or a processor, reading out and executing software programs recorded in a recording medium such as a hard disk drive (HDD) or a semiconductor memory.

The constituent elements of the control unit, for example, may be one or more electronic circuits. The one or more electronic circuits may be a general-purpose circuit(s) or a dedicated device(s).

The one or more electronic circuits may include, for example, semiconductor devices, integrated circuits (ICs) or large-scale integrated (LSI) circuits. The plurality of ICs or LSI circuits may be integrated into a single chip or mounted onto a plurality of chips. While ICs or LSI circuits are named here, how to name the circuits may change to system LSI circuits, very large scale integrated (VLSI) circuits or ultra large scale integrated (ULSI) circuits, depending on the degree of integration. A field programmable gate array (FPGA) programmed after the manufacture of an LSI circuit may be used for the same purpose.

The comprehensive or specific aspects of the present invention may be implemented by a system, a device, a method, an integrated circuit, or a computer program. Alternatively, the aspects may be implemented by a computer-readable non-transitory recording medium, such as an optical disk, an HDD, or a semiconductor memory, storing the computer program. The aspects may also be implemented by a free combination of systems, devices, methods, integrated circuits, computer programs and recording media.

The present invention includes other embodiments, such as those obtained by variously modifying the embodiments as conceived by those skilled in the art or those achieved by freely combining the constituent elements and functions in the embodiments without departing from the scope and spirit of the present invention.

### REFERENCE MARKS IN THE DRAWINGS

- 10, 11: air environment control system
- 20: work room (first space)
- 21, 31: air conditioner (regulator)
- 30: break room (second space)
- 50: person
- 60: room
- 61: temperature regulator (air conditioner, regulator)
- 62: air blower (air conditioner, regulator)
- 63: aroma device (regulator)
- 100, 200: air environment control device
- 110, 210: control unit
- 111, 211: air condition control unit
- 120, 220: determination unit
- 130: time measurement unit
- 212: temperature control unit
- 213: air flow control unit
- 214: aroma control unit

## Claims

1. An air environment control system comprising:
one or more adjustment devices that adjust an air environment in a space; and
a control device that controls the one or more adjustment devices, wherein
the control device includes a control unit configured to control (i) at least one of the one or more adjustment devices to create a cooler environment in the space, when a person does intellectual work in the space; and (ii) at least one of the one or more adjustment devices to create a warmer environment warmer than the cooler environment in the space, when the person has a break in the space, and
the control unit is further configured to control at least one of the one or more adjustment devices to apply cool stimulation to the person, when the person starts the intellectual work in the space.

2. The air environment control system according to claim 1, wherein
the one or more adjustment devices include one or more air conditioners that perform air conditioning in the space, and
the control unit includes an air condition control unit configured to control at least one of the one or more air conditioners to apply, as the cool stimulation, cold stimulation lowering a temperature felt by the person, when the person starts the intellectual work in the space.

3. The air environment control system according to claim 2, wherein
the air condition control unit is further configured to control at least one of the one or more air conditioners to apply warm stimulation raising the temperature felt by the person, when the person starts the break in the space.

4. The air environment control system according to claim 2 or 3, wherein
the one or more air conditioners include a temperature regulator that brings a temperature in the space closer to a set temperature,
the air condition control unit includes a temperature control unit configured to change the set temperature of the temperature regulator, and
the temperature control unit is configured to raise the set temperature of the temperature regulator to a first temperature that is a temperature set in the cooler environment from a second temperature lower than the first temperature over a predetermined period from a time when the person starts the intellectual work in the space.

5. The air environment control system according to claim 2 or 3, wherein
the one or more air conditioners include a temperature regulator that brings a temperature in the space closer to a set temperature,
the air condition control unit includes a temperature control unit configured to change the set temperature of the temperature regulator, and
the temperature control unit is configured to lower the set temperature of the temperature regulator to a first temperature that is a temperature set in the cooler environment from a second temperature higher than the first temperature and lower than a temperature set in the warmer environment over a predetermined period from a time when the person starts the intellectual work in the space.

6. The air environment control system according to any one of claims 2 to 5, wherein
the one or more air conditioners include an air blower that supplies air flow into the space,
the air condition control unit includes an air flow control unit configured to control the air blower, and
the air flow control unit is configured to control the air blower to send the air flow toward the person, when the person starts the intellectual work in the space.

7. The air environment control system according to any one of claims 1 to 6, wherein
the one or more adjustment devices include an aroma device that supplies aromatic substances into the space, and
the control unit includes an aroma control unit configured to control the aroma device to apply refreshing aroma as the cool stimulation, when the person starts the intellectual work in the space.

8. The air environment control system according to any one of claims 1 to 7, wherein
the space includes:
a first space in which the person does the intellectual work; and
a second space in which the person has a break, and
the control unit is configured to create the cooler environment in advance in the first space, and the warmer environment in advance in the second space.

9. The air environment control system according to any one of claims 1 to 7, wherein
the control device further includes a determination unit configured to determine whether action of the person is the intellectual work or a break, and
the control unit is configured to create the cooler environment in the space, when the determination unit determines that the action is the intellectual work; and the warmer environment in the space, when the determination unit determines that the action is a break.

10. The air environment control system according to any one of claims 1 to 9, wherein
the control device further includes a time measurement unit configured to measure a date and a time, and
the control unit is configured to determine a detail of the cool stimulation depending on a season to which the date and the time measured by the time measurement unit belongs, and applies the cool stimulation determined, when the person starts intellectual work in the space.

11. An air environment control device for controlling an air environment in a space, the air environment control device comprising:
a control unit configured to create a cooler environment in the space, when a person does intellectual work in the space; and a warmer environment warmer than the cooler environment in the space, when the person has a break in the space, wherein
the control unit is configured to apply cool stimulation to the person, when the person starts the intellectual work in the space.

12. An air environment control method of controlling an air environment in a space, the air environment control method comprising:
creating a cooler environment in the space, when a person does intellectual work in the space;
creating a warmer environment warmer than the cooler environment in the space, when the person has a break in the space; and
applying cool stimulation to the person, when the person starts the intellectual work in the space.

13. A program for causing a computer to execute the air environment control method according to claim 12.
